# EUROPEAN PATENT APPLICATION

(11) **EP 0 962 355 A2**
(43) Date of publication of application: **08.12.1999**
(21) Application number: 99201676.6
(22) Date of filing: 27.05.1999
(51) Int. Cl.: B60N 2/00

(54) **Device to fasten seats to vehicles**

(30) Priority: 02.06.1998 ES 9801425
(71) Applicant: FABRICACION ASIENTOS VEHICULOS INDUSTRIALES, S.A. (FAINSA), 08100 Martorelles (ES)
(72) Inventor: Singla Casasayas, Juan, 08100 Martorelles (Barcelona) (ES)
(74) Representative: Ungria Lopez, Javier

(57) **Abstract**

Improved device to fasten seats to vehicles, provided with pairs of seats (1 and 2) placed on both sides of a center aisle, seats that are mounted and anchored in corresponding profiles or rails (9, 9', 18) fastened to the floor and to the side of the vehicle, respectively. The anchoring for the aisle seat (1) is constituted by a first profile (3) and a second profile (9, 9'). The first profile fastened to the bottom part of the leg (4) of the seat (1) and the second profile fastened to the floor. The second profile has a groove or housing (11) with a concave bottom (12) for the positioning and locking of a bottom part of the first profile (3). The first profile is provided with a rounded elbow (5) defining a groove (6) for the location of a complementary projecting part (14) of the second profile (9, 9'). The profile (18) fastened in the side, for the anchoring of the side seat (2), has a groove (24) in which the head (26) of a rod (25) is located by means of which the fastening to the seat itself (2) is carried out. The bottom part of the the first profile (3) for locking on the concave bottom (12) of the housing (11) of the second profile (9, 9'), is defined by a straight and oblique section (8) with a certain slant towards the aisle side, forming an acute angle with respect to the section from which it is derived, defining a reinforcement with levering on the concave bottom (12) of the second profile (9, 9').

## Description

### OBJECT OF THE INVENTION

As expressed in the title of this specification, the present invention refers to an improved device to fasten seats to vehicles, comprising two independent anchorings for each pair of seats that are situated on both sides of the center aisle of the vehicle.

One of the anchorings of the device is provided for to fasten and immobilize the seat that is located at the aisle side, while the other anchoring constitutes the means to fasten and immobilize the seat of the window side of the vehicle.

The object of the invention, is not only to achieve effective fastening and immobilizing of the pair of seats, but also to allow the user to carry out the fastening or anchoring operation in a simple and rapid manner, with a noteworthy time saving with respect to the time required by other devices provided for with the same purpose.

### BACKGROUND OF THE INVENTION

As it is known, in certain types of vehicles, the corresponding seats tend to be mounted in pairs, in such a way that each pair is located between the aisle and the side of the vehicle.

As it is also known, the assembling and fastening of seats implies a considerable loss of time that undoubtedly has a repercussion on the final cost.

In due time, the applicant of the present patent application conceived a system for assembling and/or fastening pairs of seats, which due to its special design implies a very important time saving in assembly, thus reducing costs.

The cited system for assembling and/or fastening is precisely protected in the Spanish utility model application no. U-9600173 and thus describes the means to fasten the seat in the side of the vehicle, as anchoring means, by tilting, of the seat located on the aisle side. In relation to the means to anchor the seat that is located on the aisle side are based on a specially shaped profile integral to the support leg or column of the seat, profile that is anchored by means of a type of seaming in another one fastened for this purpose in the floor of the vehicle, all in such a way that the anchoring or seaming of a profile in another one is done by means of tilting of the assembly of the two seats, elevating the part of the side corresponding to the seat located in the side, without the locking means of the aisle side interfere, to then make a small displacement towards the side itself together with a tilting downward, in order to achieve the anchoring and retention to each other of the two profiles that form part of the fastening of the seat located in the aisle side, and whose two profiles are: the one integral to the part of the seat and the one located on the floor.

The shape of the profile fastened to the floor, is such that a rectangular recess with the top edge projecting and rounded and the bottom part of the recess with an arched supra-elevation determining a concave bottom on which the bottom edge of the profile integral to the foot or leg of the seat is positioned, are formed in the same. Said profile begins as of a straight branch through which the leg of the seat becomes integral, whose branch at its front edge continues in a special shape defining the profile itself, which has a rounded top section with a convexity outward, followed by a vertical section that ends in an elbow rounded upward and inward, forming an end with a practically semi-circular section for seating in the concave bottom of the profile fastened to the floor, while the top projecting and rounded edge thereof is located in the complementary shape that defines the top rounded section of the profile integral to the foot or leg of the seat.

Although said shapes of both profiles to determine the means of anchoring and fastening together, in accordance with the above mentioned operative means, may be considered adequate to enable sliding of some parts with respect to others, as well as to achieve the definitive anchoring together in a minimum amount of time. However, the manufacturing process is not simple, as a result of the operations and special tools that have to be used to achieve the semi-circular bottom shape of the profile fastened to the leg of the seat.

On its part, the anchoring of the window side seat, as described in Spanish utility model application U-9600173, is carried out by means of a square-shaped part or plate with a wing that is abutted and fastened to the inside surface of the profile fastened to the side of the vehicle, while the other wing is larger and constitutes the fastening means for the bottom part corresponding to the seat. The fastening of the square-shaped plate to the profile located in the side of the vehicle is carried out by a threaded rod ending in a generally rhombic-shaped head that, in a specific position, is made to pass through a longitudinal channel provided for in the respective inside surface of the profile fastened to side of the vehicle, in such a way that the rhombic head is kept in its position by means of the transversal rod threaded in a hole of the head, the head abutting on the outside surface of the wing or branch corresponding to the plate constituting the anchoring, all in such a way that the tightening of the rod implies the fastening and immobilizing of the anchoring and therefore of the seat. Besides the anchoring is complemented with a safety part that blocks and prevents the rotation of the rhombic shaped head housed in the stationary side profile of the vehicle, said safety part being provided with a hole for the passage of the corresponding fastening rod and of a side and transversal wing that is blocked between the groove that defines two side expansions belonging to an axial groove provided for in correspondence with each one of the ends of the wing corresponding to the square-shaped profile, all in such a way that in the assembly of that safety part, the side wing thereof is close and parallel to one of the longitudinal edges of the rhombic-shaped head, preventing the rotation thereof preventing it from coming out of the channel, in those cases in which for any reason the corresponding fastening rod becomes loose.

Obviously in this anchoring the part that constitutes the square-shaped profile is considerably long, which implies a considerable economic cost, it also being necessary to carry out the anchoring with total precision so that it sits properly on the surface corresponding to the bottom part of the seat to which it is anchored or fastened, as well as on the channel corresponding to the profile fastened in the side of the vehicle.

### DESCRIPTION OF THE INVENTION

The fastening device for vehicle seats object of the invention, based on the two above mentioned types of anchorings, in other words in those described in Spanish utility model application U-9600173, has a series of innovations and improvements of those from which advantages are derived with respect to the previously mentioned anchoring system, from the functional point of view as well as from the point of view of manufacturing or obtainment of the different parts or profiles that intervene in the anchorings.

Specifically, and first of all alluding to the anchoring of the seat that is located on the aisle side, the improvements have been conceived to solve manufacturing problems of the profile and to achieve a saving of material, even a more effective anchoring.

In this sense, a basic improvement consists of the bottom edge of the profile integral with the leg or foot of the seat, being straight and the end section corresponding to the same being inclined forward, forming an acute angle with the front section from which it is derived.

This new straight and inclined shape of the end section corresponding to the bottom edge of the cited profile, facilitates the manufacturing process, resulting much more economical in its obtainment cost.

Another improvement consists of the horizontal section from which the inclined and bottom section referred to in the above point is derived, being larger in order to define a deeper cavity, in which the top rounded edge of the profile fastened to the floor will be more enveloped in the corresponding anchoring, in such a way that this top encircling, along with the slant and straightness of the bottom end section of the profile fastened to the part of the seat, provide a more secure and more effective anchoring.

The fact that there is in the rounded top edge corresponding to the wing that delimits the channel configured by the profile fastened to the floor, a slight recess with respect to the previous solution, is also an improvement of the anchoring that is being described. This facilitates the entry of the inclined and end section of the profile fastened to the leg of the seat.

Given that the profile of the described anchor is conceived in order to be mounted on the side of the step that is defined between the aisle and the area of the seats, the latter being higher, it has been provided for that in the event that the floor does not have a step the profile will then have a special shape, specifically in the form of a horizontal channel with the top strangled opening and side wings horizontal thereto, being complemented with a closing cover of the channel, that is interrupted in the areas where the anchoring of the seat takes place.

As to the anchoring of the side or window side of the vehicle, as a novelty there is the fact that the square-shaped profile, instead of being a single and considerably long part, is defined by two small parts with an identical shape and both fastenable in an independent manner in the bottom part of the seat, each one of them anchoring to the corresponding profile fastened in the side of the vehicle, intervening the threaded rod with its rhombic-shaped head, the safety part that constitutes the nonrotating means of the previous one, etc.

### BRIEF DESCRIPTION OF THE DRAWINGS

In order to complete the description that is going to be made hereinafter and for the purpose of providing a better understanding of the characteristics of the invention, the present specification is accompanies by a series of drawings on the basis of which one will more easily understand the innovations and advantages of the device made in accordance with the object of the invention.
Figure 1 shows a rear schematic view of a pair of seats ready to be fastened and immobilized by means of the device object of the invention, whose two anchorings are open.
Figure 2 shows a perspective view of the two profiles that intervene in the anchoring of the seat located on the aisle side.
Figure 3 shows a cross section view of the two profiles represented in the previous figure, arranged in a superimposed manner and that corresponds to the previously anterior position in order to carry out the handling in order to effect the anchoring between the profiles.

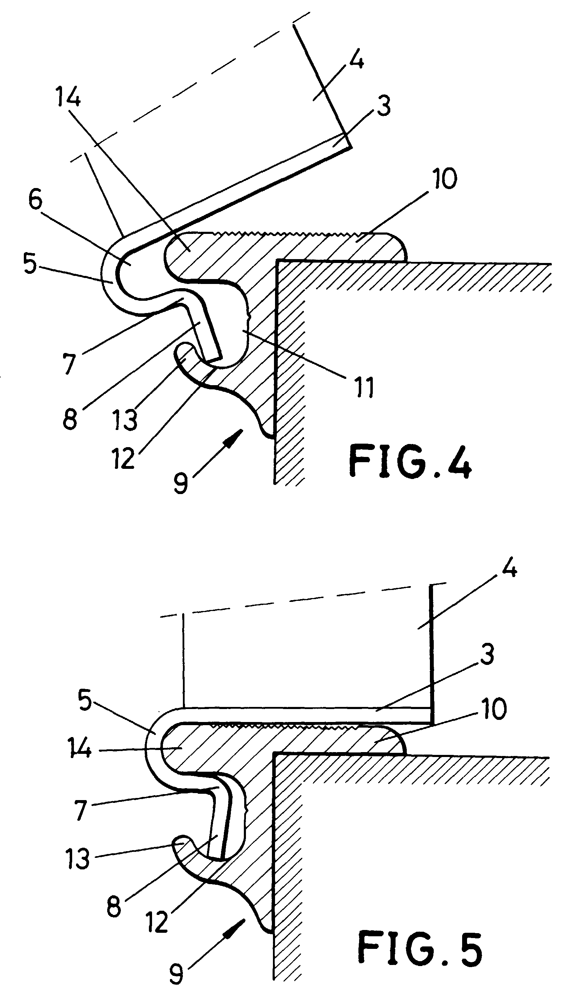

Figure 4 shows another section view like the one in the previous figure, in the intermediate coupling phase of the profile fastened to the leg of the seat with respect to the profile fastened to the floor of the vehicle.
Figure 5 shows a cross section view like the one in figures 2, 3 and 4, in which the definitive or anchoring position between two profiles that intervene in the fastening of the seat located on the aisle side is represented.
Figure 6 shows a perspective open view of the profiles and elements that intervene in the anchoring of the seat located on the side of the vehicle, in other words, on the window side.

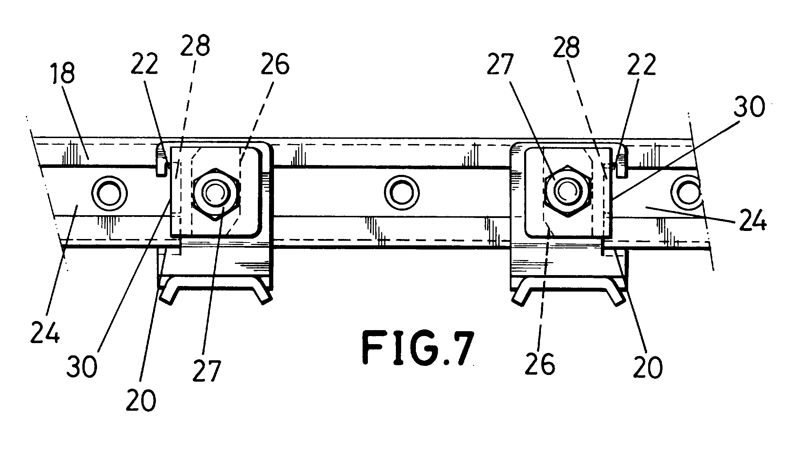

Figure 7 shows a longitudinal view of the anchoring represented in the previous figure, in the assembly state.
Figure 8 shows a cross section view of the anchoring profile used in flat floors, with the closing cover of the channel that is defined in said profile.
Figure 9 shows the same view of the previous figure, with the profile integral to the seat in the definitive anchoring position.

### DESCRIPTION OF THE PREFERRED EMBODIMENT

As one can see in the cited figures, the device of the invention is provided for to fasten a pair of seats (1) and (2), the first one located on the center aisle side of a bus or similar vehicle, and the second seat is located on the side, that is to say, on the window side. The two seats (1) and (2) for a single assembly that is fastened by means of two independent anchorings, one located on the aisle side, logically for the anchoring of the seat (1) and the other one located on the side, logically for the fastening of the seat (2).

Now then, the anchoring by means of which the fastening of the seat (1) will be carried out, is constituted as of a section (3) that is integral to the bottom part of the corresponding leg (4) of the seat (1), carrying out this locking or fastening by means of the branch corresponding to reference (3) itself of the profile.

That horizontal branch of the profile (3) has frontally a rounded elbow (5) that defines a groove (6) whose function will be explained later on, which as of whose rounding (5) it continues, after another elbow (7), in a straight and inclined bottom section (8), with an angulation slightly less than 90º.

That section (3) is provided for its coupling on a section profile (9) fastened to the floor of the vehicle, said profile (9) having a top and horizontal section (10) that is longitudinally ribbed and that frontally forms a groove (11) with a concave bottom (12), as of which a short arched wing slightly slanted outward, referred to as (13), projects.

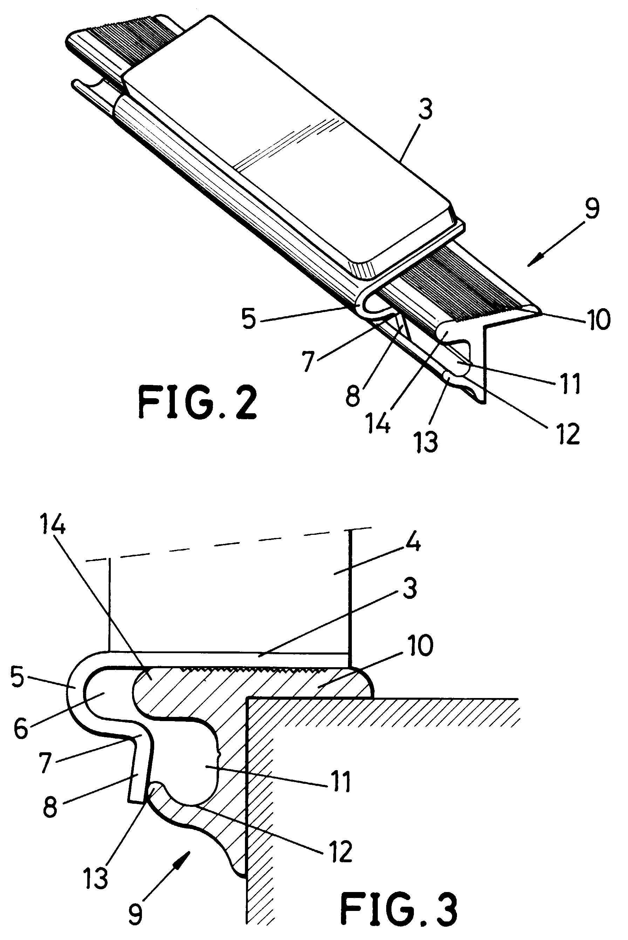

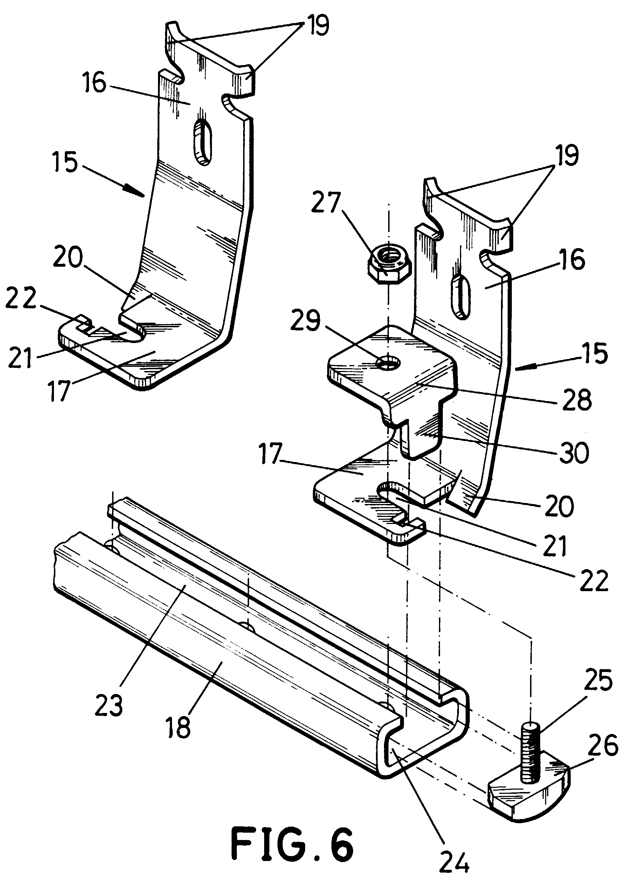

Now then, the assembly and corresponding anchoring of that part of the seat (1) is done as of the position represented in figure 3, wherein the profiles (3) and (9) are totally separated, in such a way that as of that position it will be necessary to first of all move the assembly of the seats (1) and (2) towards the side of the aisle, and in turn tilt it upward from the opposite side part, in other words from the seat (2), in order to then pull it towards that side for the purpose of achieving that the straight and oblique section (8) of the profile (3) is located in the housing (11) of the profile (9) fastened to the floor, in order to then carry out the tilting towards the horizontal position, the section (14) of the profile (9) being in the groove (6) of the profile (3), and in turn the bottom straight and oblique section (8) of the profile (3) anchored in the concave bottom (12), levering said profile (9), as it is clearly shown in figure 5.

In this way a better reinforcement is achieved in the anchoring, given that on one side the part (14) of the profile (9) is totally embraced or enveloped by the groove (6) of the profile (3), and on the other hand the inclined and straight section (8) of the profile (3) is locked without the possibility of that profile moving, and therefore the assembly of the seats, with regard to the profile fastened to the floor referred to as number (9).

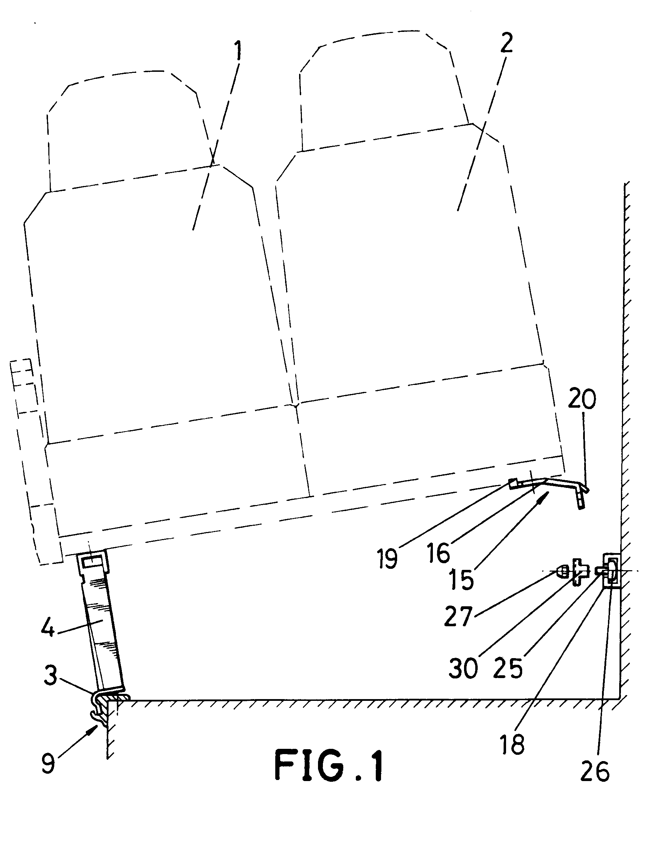

As to the anchoring of the window or side seat (2) of the vehicle, the same is carried out as of a pair of square-shaped parts (15), in such a way that through its longer branch (16), they are fastened to the bottom part of the seat (2), as is shown in figure 1, while through its shorter branch (17), the fastening to the guiding profile (18) fastened horizontally to the side of the vehicle is carried out, as represented in figure 1.

The longer branch (16) has an obtuse angle, as well as an elongated hole for the anchoring to the bottom part of the seat itself (2), at the same time that the side edges of said branch (16), in correspondence with the end thereof, have some small oblique lugs (19), by cutting the same material, that are adopted collaterally to the corresponding profile or bottom part of the seat (2) in which the fastening is carried out, while in the angulation between the branches (16) and (17) of the square-shaped parts or profiles (15), there is a heel or oblique and outside wing (20) that presses against the outside surface corresponding to the side and top branch of the profile (18) to which the square-shaped parts (15) are fastened.

The branch (17) of each one of these parts (21) has a groove (21), with a side notch (22) (a side expansion of the groove (21)) close to its mouth, all of this in such a way that the branch (17) is abutted in correspondence with the outside surface of the profile (18), specifically on the surface on which the longitudinal throat (23) of said profile (18) is made, given that the profile defines a U-shaped groove (24), with the strangulated mouth defining that throat (23) which was alluded to.

The anchoring is done by means of the intervention of a rod (25) with a rhombic-shaped head (26), that may slide over the channel (24) of the profile (18) in order to carry out the assembly, the rod (25) being located in correspondence with the throat (23) of the profile (18) and in turn housed in the groove (21), carrying out the fastening by the corresponding nut (27) that screws on the above mentioned rod (25), thus pressing and fastening the square-shaped part (15), by means of its branch (17), against the profile (18).

For the immobilization of the head (16) of the cited rod, in order to prevent the rod from turning, which would involve loosening and the corresponding risk of unfastening of the seat, there has been provided for a complementary safety part (28) that has a quadrangular shape with a part that is housed in the inside of the channel (24) of the profile (18), part (28) that has a hole (29) for the passage of the rod itself (25), at the same time that said part (28) has a perpendicular branch (30) that is housed precisely in the throat that defines the side notch (22) of the groove (21), thus immobilizing part (28), all of this which when one of the surfaces of the head (26) of the rod (25) abuts against the branch (30), said rod will not be able to turn, since the part (28) is anchored by means of its branch (30), as it has just been put forth.

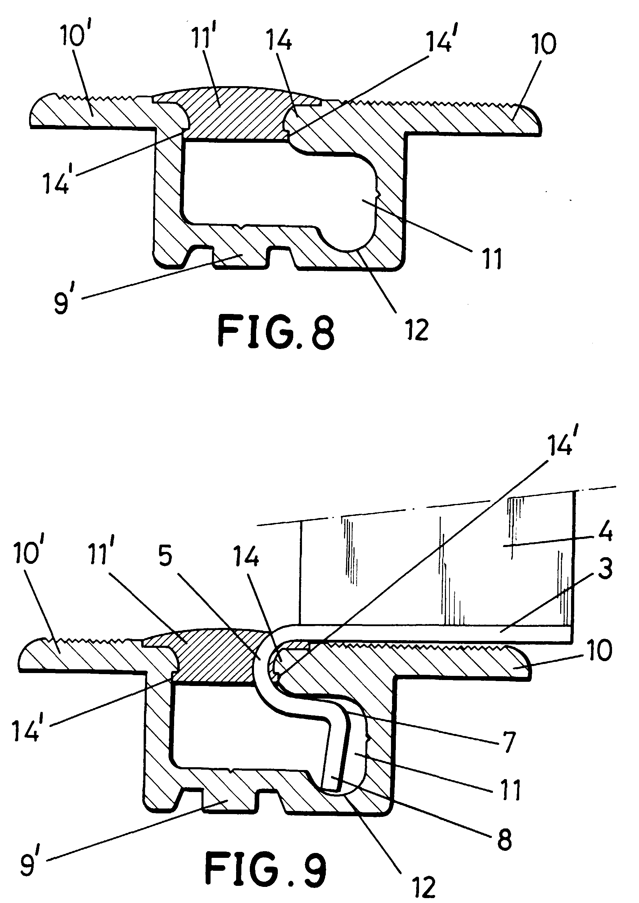

In the case of flat floors, in other words, without a step between the center aisle of vehicle and the sides where the seats are mounted, then the section (9) is replaced by another one (9') with its corresponding horizontal section (10), the groove with a concave bottom (11) and the projection (14), all of this to position the corresponding profile (3) integral to the leg (4) of the seat, on this shape, the groove (6) of that profile (3) projection (14) being adapted and the end section (8) of the cited profile (3) being blocked by wedging in the concave groove (11), as it was specifically represented in figure 5 and how it is represented in figure 9.

Now then, that profile (9'), in replacement of the profile (9) for those cases in which the floor of the vehicle is flat, has a U-shaped groove for location in a throat made for that purpose in the floor itself, in such a way that the profile (9'), aside from the already cited section or wing (10), has another opposite one (10'), in other words, the first one of them derived from which it can be considered as one of the side wings of the profile (9') and the other one derived from the other side branch, these sections or outside and side extensions (10) and (10') being superimposed on the surface of the floor that is located on both sides of the corresponding groove or throat.

The way to assemble the seat, is identical to the one described above, just as it is represented in figures 8 and 9, where this embodiment of the anchoring profile (9') is shown for use thereof in flat floors, in accordance with all that which has been stated above.

Said profile (9') is complemented with a cover (11') arranged longitudinally to close the mouth of the U-shaped channel that forms said profile (9'), in such a way that the cover (11') will be constituted by a profile of rubber or the like that will be interrupted in those sections in which the part of the profile (3) corresponding to the part to which the leg or column (4) of the seat is integral has to be hooked.

The fastening or retaining of the cover (11') is carried out by insertion of side projections thereof in steps (14') provided for in the opposite parts that define the mouth or opening of the cited grooved profile.

## Claims

1. Improved device to fasten seats to vehicles, which being especially applicable in vehicles for public transportation, such as buses and the like, provided with pairs of seats (1 and 2) placed on both sides of a center aisle, seats that are mounted and anchored in corresponding profiles or rails (9, 9', 18) fastened to the floor and to the side of the vehicle, respectively, and wherein the anchoring for the aisle seat (1) is constituted by a first profile (3) and a second profile (9, 9'), the first profile fastened to the bottom part of the leg (4) of the seat (1) and the second profile fastened to the floor, the second profile having a groove or housing (11) with a concave bottom (12) for the positioning and locking of a bottom part of the first profile (3), the first profile being provided with a rounded elbow (5) defining a groove (6) for the location of a complementary projecting part (14) of the the second profile (9, 9'), while the profile (18) fastened in the side, for the anchoring of the side seat (2), has a groove (24) in which the head (26) of a rod (25) is located by means of which the fastening to the seat itself (2) is carried out, with the complement of a square-shaped part (15), with a larger branch (16) for fastening to the part of the seat (2) and with a smaller branch (17), through which the fastening to the profile (18) is carried out by means of the rod (25), being complemented with a part (28) that has a portion (30) located in the inside of the profile (18) in order to prevent the rotation of the head (26) of the rod (25) and to prevent a possible loosening, characterized in that the bottom part of the the first profile (3) for locking on the concave bottom (12) of the housing (11) of the second profile (9, 9'), is defined by a straight and oblique section (8) with a certain slant towards the aisle side, forming an acute angle with respect to the section from which it is derived, defining a reinforcement with levering on the concave bottom (12) of the second profile (9, 9').

2. Improved device to fasten seats to vehicles, according to claim 1, characterized in that the channel (6) formed in the first profile (3) is considerably deep and the complementary part (14) of the second profile (9, 9') of the floor is housed and totally enveloped in it, all of this collaborating in the reinforcement in the anchoring carried out between the profiles (3, 9, 9').

3. Improved device to fasten seats to vehicles, according to any of the above claims, characterized in that the concave bottom (12) of the housing (11) of the second profile (9) fastened to the floor of the vehicle, is delimited by a short arched wing (13) with a rounded end, permitting easy entry of the straight and inclined section (8) of the first profile (3) in the cited housing (11) of the second profile (9).

4. Improved device to fasten seats to vehicles, according to claim 1, characterized in that the anchoring profile (15) of the side seat (2) on the profile (18) is constituted by two square-shaped parts, with unequal branches, where the larger branch (16) constitutes the fastening means on the bottom part of the seat (2) structure, while the smaller branch, having a groove (21) with a side notch (22) to house the anchoring rod (25) and the part (28) that immobilizes the rod, has, in correspondence with the edge intersecting with the larger branch (16), a wing or outside heel (20) that adapts to and rests on the side and top surface of the profile (18) anchored to the side of the vehicle, the larger branch (16) of each profile (15) likewise having side and end wings (19) for adaptation on the sides of the bottom part corresponding to the seat (2) structure.

5. Improved device to fasten seats to vehicles, according to any of the claims 1, 2 and 4, characterized in that the second profile (9') is a profile for anchoring in flat floors of vehicles, which profile has a U-shape and the groove (11) for placement and anchoring of the end and oblique section (8) of the profile (3) integral to the leg (4) of the seat is formed in it, also having the corresponding horizontal section (10) and another section (10') opposite the previous one, both sections resting in a superposed manner on the horizontal surface defined on both sides of the respective throat provided for in the floor of the vehicle for this purpose, in which throat the profile itself (9') is positioned and anchored; a closing cover (11') of the mouth of that profile (9') being provided for, a closing cover (11') that is constituted by a profile of rubber or the like that is retained by side projections thereof in steps (14') of the profile (9'), said closing cover (11') having suitable interruptions in order to allow the passage of the part corresponding to the anchoring profile (3).
